# FASCICULE DE BREVET EUROPEEN

(11) **EP 3 331 752 B1**
(45) Date de publication et mention de la délivrance du brevet: **28.08.2019**
(21) Numéro de dépôt: 16744824.0
(22) Date de dépôt: 11.07.2016
(51) Int. Cl.: B62D 25/20

(54) **PLANCHER DE VÉHICULE**
FAHRZEUGBODEN
VEHICLE FLOOR

(30) Priorité: 03.08.2015 FR 1557487
(43) Date de publication de la demande: 13.06.2018
(73) Titulaire: PSA AUTOMOBILES S.A., 78300 Poissy (FR)
(72) Inventeur: RICHARD, Olivier, 68130 Wittersdorf (FR)
(86) Numéro de dépôt international: PCT/FR2016/051770
(87) Numéro de publication internationale: WO 2017/021603

(56) Documents cités:
- EP-A1- 2 700 568
- EP-A2- 2 199 133
- FR-A1- 2 972 418
- FR-A1- 3 011 787
- JP-U- H0 263 281

## Description

La présente invention concerne de manière générale un plancher de véhicule monté dans un véhicule automobile et un véhicule comprenant ce plancher de véhicule.

De manière générale, les véhicules automobiles sont équipés de planchers disposés sur leur châssis. Ces planchers permettent, en plus d'offrir un confort visuel et tactile, d'intégrer divers mécanismes afin d'améliorer la modularité des véhicules. Par exemple, la plupart des véhicules sont aujourd'hui dotés de sièges et/ou de consoles coulissantes. Ces éléments coulissants sont fixés au plancher de manière mobile et plus précisément au moyen d'un rail de guidage intégré dans le plancher. En général, des éléments sont positionnés sur plusieurs rails ou glissières ce qui occasionne des couts importants en termes d'interface sur la structure. Il a donc été pensé de ne réaliser qu'un seul rail ou glissière pour permettre le mouvement de ces éléments. Cependant un problème lié à l'utilisation d'un seul rail est qu'un effort est exercé par l'élément sur le plancher lorsqu'il est actionné, par exemple au moyen d'une poignée située à l'avant. Pour contrer cet effort exercé en bout d'élément. Il a été réalisé des contres appuis rigides de part et d'autre du rail central sous la forme de pistes permettant la contre réaction liée au bras de levier avec un effort en bout de table.

Par exemple, le document FR 3 011 787 décrit un véhicule automobile comprenant une console coulissante. La console coulisse dans un sens longitudinal du véhicule grâce à un système de coulissement comprenant un rail unique dans lequel voyage un système d'ancrage de la console et deux pistes d'appui sur lesquelles des parties situées sous la console viennent en appui. Les pistes sont ancrées dans un tapis de plancher. Un problème de ce type de dispositif est que les pistes peuvent facilement se détacher du plancher.

Un but de la présente invention est de répondre aux inconvénients du document de l'art antérieur mentionné ci-dessus et en particulier, tout d'abord, de proposer un plancher de véhicule robuste et facile à mettre en place.

Pour cela un premier aspect de l'invention concerne un plancher de véhicule comprenant une structure multicouche incluant au moins une couche de revêtement, agencée pour revêtir la structure multicouche, et une couche d'appui, agencée pour venir en appui sur un châssis du véhicule, au moins un système de coulissement comprenant au moins une piste d'appui agencée pour supporter des éléments d'appui d'un élément coulissant, et au moins un moyen de fixation de la au moins une piste d'appui sur la structure multicouche, caractérisé en ce que le au moins un moyen de fixation et la au moins une piste d'appui s'accouplent de manière à prendre la structure multicouche en sandwich. Ainsi, le plancher est robuste car la structure multicouche est serrée par la piste d'appui et le moyen de fixation.

Une réalisation particulièrement intéressante consiste en ce que le au moins un moyen de fixation est un moyen de rattrapage de jeu agencé pour serrer la au moins une piste d'appui contre la couche de revêtement. De cette manière, on peut gérer le niveau de serrage.

De manière avantageuse, la couche d'appui présente un alésage agencé pour recevoir une extrémité inférieure de la au moins une piste d'appui. Ainsi, le moyen de fixation prend peu de volume.

Avantageusement, le au moins un moyen de fixation est une vis et un fond du alésage présente au moins un trou traversant agencé pour laisser passer la au moins une vis. De cette manière, le plancher est facile à monter.

Une réalisation particulièrement intéressante consiste en ce que le plancher de véhicule comprend en outre un rail de guidage central au moins partiellement en appui sur la couche de revêtement et agencé pour être fixé sur le châssis du véhicule de manière à prendre le plancher en sandwich avec le châssis. Ainsi, le plancher est fixé au châssis de manière fiable et sans pièce supplémentaire superflue.

De manière avantageuse, la au moins une piste d'appui est un profilé en aluminium présentant une section transversale forme de T. Ainsi, elle présente des surfaces d'appui bien définies.

Avantageusement, la au moins une piste d'appui comprend en outre un moyen de rattrapage de jeu horizontal. De cette manière, on empêche que l'alésage soit visible.

Une réalisation particulièrement intéressante consiste en ce que le moyen de rattrapage de jeu horizontal est un embout rapporté monté à chaque extrémité de la au moins une piste d'appui. Ainsi, la piste peut être montée dans les deux sens.

De manière avantageuse, l'embout rapporté est monté à chaque extrémité de la au moins une piste d'appui au moyen d'une vis auto-taraudeuse. De cette manière, l'embout est rigidement fixé à la piste.

Un second aspect de l'invention est un véhicule automobile comportant au moins un plancher de véhicule selon le premier aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par le dessin annexé, dans lequel :

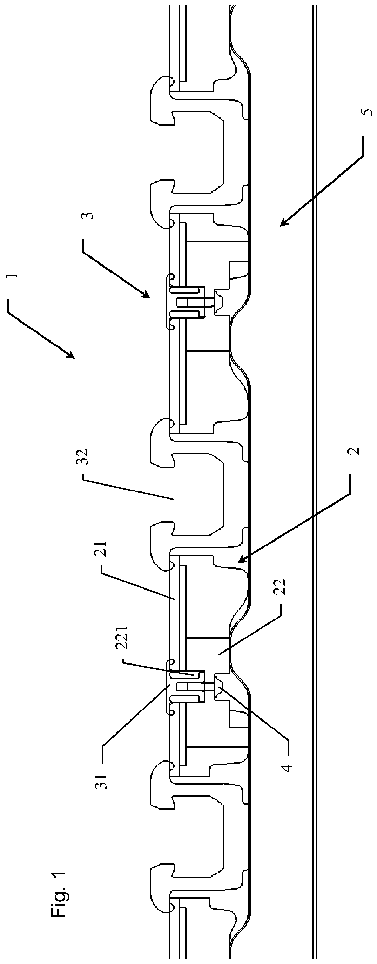

- la figure 1 représente une vue en coupe du plancher de véhicule selon la présente invention.

La figure 1 représente un plancher de véhicule selon un mode de réalisation préféré de la présente invention.

Le plancher de véhicule selon ce mode de réalisation préféré de la présente invention comprend une structure multicouche 2 incluant au moins une couche de revêtement 21 qui est idéalement un tapis et est agencée pour revêtir la structure multicouche 2, et une couche d'appui 22, agencée pour venir en appui sur un châssis 5 du véhicule. La couche d'appui comprend idéalement une structure en mousse et une structure en bois ou MDF (fibres à densité moyenne). La structure multicouche 22 peut évidemment comprendre d'autres couches. Le plancher 1 comprend également au moins un système de coulissement 3, celui-ci comprenant au moins une piste d'appui 31 agencée pour supporter des éléments d'appui d'un élément coulissant (non représenté), et au moins un moyen de fixation 4 de la au moins une piste d'appui sur la structure multicouche 2. De préférence, le au moins un moyen de fixation 4 est un moyen de rattrapage de jeu, tel qu'une vis, agencé pour serrer la au moins une piste d'appui 31 contre la couche de revêtement 21. De cette manière le au moins un moyen de fixation 4 et la au moins une piste d'appui 31 s'accouplent de manière à prendre la structure multicouche en sandwich et améliorent la robustesse du plancher.

Plus précisément, la au moins une piste d'appui 31 est de préférence un profilé en aluminium présentant une section transversale forme de T. Ainsi, au moins une portion de chaque extrémité de la barre horizontale du T vient en appui sur la surface de la couche de revêtement 21 pour la serrer. Par ailleurs, la couche d'appui 22, et plus précisément une portion en bois ou MDF de la couche d'appui 22, présente un alésage 221 agencé pour recevoir une extrémité inférieure de la barre verticale du T de la au moins une piste d'appui 31.

Ainsi, un fond du alésage 221 présente au moins un trou traversant agencé pour laisser passer la au moins la vis de fixation 4.

Comme on peut le voir, le plancher 1 comprend en outre un rail de guidage central 32 agencé pour recevoir et guider un moyen d'ancrage d'un élément coulissant (non représenté). En plus de servir de moyen de guidage, ce rail 32 peut également et avantageusement servir à fixer le plancher sur le châssis 5 du véhicule. En effet, le rail 32 a une forme relativement évasée avec des ailettes latérales qui viennent au moins partiellement en appui sur la couche de revêtement 21 de manière à exercer une force sur celle-ci et la prendre en sandwich avec le châssis 5.

Bien que non représenté dans le dessin, la au moins une piste d'appui 31 du plancher de l'invention comprend en outre un moyen de rattrapage de jeu horizontal, de préférence sous la forme d'un embout rapporté monté à chaque extrémité de la au moins une piste d'appui 31. De préférence, 'embout rapporté est monté à chaque extrémité de la au moins une piste d'appui 31 au moyen d'une vis auto-taraudeuse.

L'invention porte également sur un véhicule automobile comprenant au moins un plancher de véhicule tel que défini plus haut.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Plancher (1) de véhicule comprenant :
- une structure multicouche (2) incluant au moins une couche de revêtement (21), agencée pour revêtir ladite structure multicouche, et une couche d'appui (22), agencée pour venir en appui sur un châssis (5) du véhicule,
- au moins un système de coulissement (3) comprenant au moins une piste d'appui (31) agencée pour supporter des éléments d'appui d'un élément coulissant, et
- au moins un moyen de fixation (4) de ladite au moins une piste d'appui sur ladite structure multicouche,
**caractérisé en ce que**
ledit au moins un moyen de fixation et ladite au moins une piste d'appui s'accouplent de manière à prendre la structure multicouche en sandwich.

2. Plancher de véhicule selon la revendication 1, **caractérisé en ce que** ledit au moins un moyen de fixation (4) est un moyen de rattrapage de jeu agencé pour serrer ladite au moins une piste d'appui (31) contre ladite couche de revêtement (21).

3. Plancher de véhicule selon la revendication 1 ou 2, **caractérisé en ce que** ladite couche d'appui (22) présente un alésage (221) agencé pour recevoir une extrémité inférieure de ladite au moins une piste d'appui (31).

4. Plancher de véhicule selon la revendication 3, **caractérisé en ce que** ledit au moins un moyen de fixation (4) est une vis et un fond dudit alésage (221) présente au moins un trou traversant agencé pour laisser passer ladite au moins une vis.

5. Plancher de véhicule selon l'une quelconque des revendications 1 à 4, **caractérisé en ce qu'**il comprend en outre un rail de guidage central (32) au moins partiellement en appui sur ladite couche de revêtement (21) et agencé pour être fixé sur le châssis (5) du véhicule de manière à prendre le plancher (1) en sandwich avec le châssis.

6. Plancher de véhicule selon l'une quelconque des revendications 1 à 5, **caractérisé en ce que** ladite au moins une piste d'appui (31) est un profilé en aluminium présentant une section transversale forme de T.

7. Plancher de véhicule selon l'une quelconque des revendications 1 à 6, **caractérisé en ce que** ladite au moins une piste d'appui (31) comprend en outre un moyen de rattrapage de jeu horizontal.

8. Plancher de véhicule la revendication 7, **caractérisé en ce que** le moyen de rattrapage de jeu horizontal est un embout rapporté monté à chaque extrémité de ladite au moins une piste d'appui (31).

9. Plancher de véhicule selon la revendication 8, **caractérisé en ce que** l'embout rapporté est monté à chaque extrémité de ladite au moins une piste d'appui (31) au moyen d'une vis auto-taraudeuse.

10. Véhicule automobile comportant au moins un plancher de véhicule selon l'une quelconque des revendications 1 à 9.

## Patentansprüche

1. Fahrzeugboden (1), umfassend:
- eine mehrschichtige Struktur (2), darin eingeschlossen mindestens eine Deckschicht (21), die angeordnet ist, um die mehrschichtige Struktur abzudecken, und ein Auflageschicht (22), die angeordnet ist, um auf einem Rahmen (5) des Fahrzeugs aufzuliegen,
- mindestens ein Gleitsystem (3), umfassend mindestens eine Auflagebahn (31), die angeordnet ist, um Auflageelemente eines Gleitelements zu tragen, und
- mindestens ein Befestigungsmittel (4) der mindestens einen Auflagebahn auf der mehrschichtigen Struktur,
**dadurch gekennzeichnet, dass**
das mindestens ein Befestigungsmittel und die mindestens eine Auflagebahn sich aneinander anpassen, so dass sie die mehrschichtige Struktur sandwichartig einschließen.

2. Fahrzeugboden nach Anspruch 1, **dadurch gekennzeichnet, dass** das mindestens eine Befestigungsmittel (4) ein Mittel zur Spielbeseitigung ist, das angeordnet ist, um die mindestens eine Auflagebahn (31) gegen die Deckschicht zu (21) festzuziehen.

3. Fahrzeugboden nach Anspruch 1 oder 2, **dadurch gekennzeichnet, dass** die Auflageschicht (22) eine Bohrung (221) aufweist, die angeordnet ist, um ein unteres Ende der mindestens einen Auflagebahn (31) aufzunehmen.

4. Fahrzeugboden nach Anspruch 3, **dadurch gekennzeichnet, dass** das mindestens eine Befestigungsmittel (4) eine Schraube ist und ein Boden der Bohrung (221) mindestens ein Querloch aufweist, das angeordnet ist, um die mindestens eine Schraube passieren zu lassen.

5. Fahrzeugboden nach einem der Ansprüche 1 bis 4, **dadurch gekennzeichnet, dass** er außerdem eine zentrale Führungsschiene (32) umfasst, die mindestens teilweise auf der Deckschicht (21) aufliegt und angeordnet ist, um auf dem Fahrgestell (5) des Fahrzeugs befestigt zu sein, um den Boden (1) mit dem Fahrgestell sandwichartig einzuschließen.

6. Fahrzeugboden nach einem der Ansprüche 1 bis 5, **dadurch gekennzeichnet, dass** die mindestens eine Auflagebahn (31) ein Profil aus Aluminium ist, das einen T-förmigen Querschnitt aufweist.

7. Fahrzeugboden nach einem der Ansprüche 1 bis 6, **dadurch gekennzeichnet, dass** die mindestens eine Auflagebahn (31) außerdem ein horizontales Spielbeseitigungsmittel umfasst.

8. Fahrzeugboden nach Anspruch 7, **dadurch gekennzeichnet, dass** das horizontale Spielbeseitigungsmittel eine ausgesetztes Ansatzstück ist, das auf jedes Ende der mindestens einen Auflagebahn (31) montiert ist.

9. Fahrzeugboden nach Anspruch 8, **dadurch gekennzeichnet, dass** das aufgesetzte Ansatzstück auf jedes Ende der mindestens einen Auflagebahn (31) mit Hilfe mindestens einer selbstschneidenden Schraube montiert ist.

10. Kraftfahrzeug, umfassend mindestens einen Fahrzeugboden nach einem der Ansprüche 1 bis 9.

## Claims

1. Vehicle floor (1) comprising:
- a multilayer structure (2) including at least one coating layer (21), arranged to cover said multilayer structure, and a support layer (22), arranged to bear against a framework (5) of the vehicle,
- at least one sliding system (3) comprising at least one support track (31) arranged to support the support elements of a sliding element, and
- at least one attachment means (4) of said at least one support track on said multilayer structure,
**characterised in that**
said at least one attachment means and said at least one support track are coupled together in such a way as to sandwich the multilayer structure.

2. Vehicle floor according to claim 1, **characterised in that** said at least one attachment means (4) is a means for taking up the slack arranged to tighten said at least one support track (31) against said coating layer (21).

3. Vehicle floor according to claim 1 or 2, **characterised in that** said support layer (22) has a bore (221) arranged to receive a lower end of said at least one support track (31).

4. Vehicle floor according to claim 3, **characterised in that** said at least one attachment means (4) is a screw and a bottom of said bore (221) has at least one through hole arranged to allow to pass said at least one screw.

5. Vehicle floor according to any of claims 1 to 4, **characterised in that** it further comprises a central guide rail (32) at least partially bearing on said coating layer (21) and arranged to be fastened onto the framework (5) of the vehicle in such a way as to sandwich the floor (1) with the frame.

6. Vehicle floor according to any of claims 1 to 5, **characterised in that** said at least one support track (31) is an aluminium profile that has a cross section in the shape of a T.

7. Vehicle floor according to any of claims 1 to 6, **characterised in that** said at least one support track (31) further comprises a means for taking up horizontal slack.

8. Vehicle floor according to claim 7, **characterised in that** the means for taking up horizontal slack is an added endpiece mounted at each end of said at least one support track (31).

9. Vehicle floor according to claim 8, **characterised in that** the added endpiece is mounted at each end of said at least one support track (31) by means of a self-tapping screw.

10. Motor vehicle comprising at least one vehicle floor according to any of claims 1 to 9.
